(19) **Europäisches Patentamt**
**European Patent Office**
**Office européen des brevets**

(11) **EP 4 723 190 A1**

(12) **EUROPEAN PATENT APPLICATION**
published in accordance with Art. 153(4) EPC

(43) Date of publication:
08.04.2026 Bulletin 2026/15

(21) Application number: 24935599.1

(22) Date of filing: 14.08.2024

(51) International Patent Classification (IPC):
$H01M\ 4/13^{(2010.01)}$    $H01M\ 10/058^{(2010.01)}$
$H01M\ 10/0525^{(2010.01)}$

(52) Cooperative Patent Classification (CPC):
Y02E 60/10

(86) International application number:
PCT/CN2024/111950

(87) International publication number:
WO 2025/218067 (23.10.2025 Gazette 2025/43)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.04.2024 CN 202410458717

(71) Applicant: **Battero Tech Corporation Limited
Shanghai 201400 (CN)**

(72) Inventors:
• **FANG, Yuqian
Shanghai 201400 (CN)**
• **HUANG, Haining
Shanghai 201400 (CN)**

(74) Representative: **Vitina, Maruta et al
Agency Tria Robit
Vilandes iela 5-2
1010 Riga (LV)**

(54) **SECONDARY BATTERY AND MANUFACTURING METHOD THEREFOR, POSITIVE ELECTRODE SHEET, NEGATIVE ELECTRODE SHEET, AND ELECTRIC DEVICE**

(57)    The present disclosure provides a secondary battery and a preparation method thereof, a positive electrode plate, a negative electrode plate and an electrically-powered device. A positive electrode active material includes a lithium iron phosphate (LFP) positive electrode material, $Li_2NiO_2$ and $Li_5FeO_4$. By adjusting a mixing ratio and limiting the mixing ratio, a specific capacity of active materials and an electrolyte filling coefficient to satisfy a specific relationship, the specific capacity and cycle performance of LFP batteries can be significantly improved, thereby making the lithium-ion batteries simultaneously exhibit superior energy density, cycle performance and safety.

EP 4 723 190 A1

## Description

### TECHNICAL FIELD

This application relates to lithium (Li)-ion batteries, and more particularly to a secondary battery and a preparation method thereof, a positive electrode plate, a negative electrode plate and an electrically-powered device.

### BACKGROUND

The development of new energy vehicles has been seriously restricted by the range. Currently, the power batteries are predominated by ternary batteries and lithium iron phosphate (LFP) batteries. Ternary batteries have a high energy density, but a lower economic efficiency and a poorer safety. LFP batteries have a lower energy density, but exhibit a lower manufacturing cost, higher safety and superior cycle life. Therefore, enhancing the energy density and the cycle life of LFP batteries has been widely considered as a direct and feasible approach to overcome the range limitation of new energy vehicles.

With the advancement of battery design and manufacturing technologies, the utilization of internal space in the battery casing has been optimized to its limit, making it extremely difficult to further improve the energy density through spatial optimization. Currently, the main approach to enhance the energy density and cycle performance is performed by optimizing the positive electrode active material. The formation of solid electrolyte interface (SEI) on the negative electrode of lithium-ion batteries will consume active lithium, resulting in attenuated initial capacity and shortened service life. To address this problem, a small amount of lithium sources can be introduced by lithium replenishment technologies (also named lithium supplementing) before charge-discharge cycles, which not only improves the initial charge-discharge efficiency but also compensates for the lithium loss during cycling. At present, the lithium replenishment is performed mainly by negative electrode lithium supplementing and positive electrode lithium supplementing.

The development of the negative electrode lithium supplementing has a relatively long history, mainly including lithium foil-based lithium supplementing, lithium powder-based lithium supplementing, and chemical lithium supplementing. Regarding the lithium foil-based lithium supplementing, a self-discharge mechanism driven by potential difference is utilized, in which in the existence of electrolyte, when the negative electrode material comes into contact with the lithium metal foil, electrons spontaneously move towards the negative electrode, accompanied by the intercalation of $Li^+$ into the negative electrode. Lithium powder can be directly applied to a surface of the negative electrode plate or introduced during the negative electrode slurry mixing process. Although the negative electrode lithium supplementing offers a relatively high lithium supplementing capacity, it imposes extremely stringent requirements for processing equipment and environment and poses serious safety risks due to the high chemical reactivity of active lithium.

Positive electrode lithium supplementing usually adopts electrochemical methods by adding positive electrode lithium supplementing additives into lithium-ion batteries. During the charging process, these additives can release active lithium to compensate for the consumption caused by the formation of SEI on the negative electrode, while prolonging the cycle life of batteries. The positive electrode lithium supplementing additives have a high safety, but the single-component additives still have several limitations. For example, $Li_5FeO_4$ exhibits a high capacity, with a theoretical specific capacity up to 867 mAh/g, but it suffers from poor stability in an air environment, and will generate oxygen during the delithiation process. Conversely, $Li_2NiO_2$ has an excellent processing performance and does not produce gas during the delithiation reaction, but its high impedance will adversely affect the battery's rate performance and cycle performance.

Therefore, the current positive electrode lithium supplementing technologies still cannot achieve the simultaneous enhancement of the energy density and cycle life of LFP batteries.

In view of this, the present application is herein proposed.

### SUMMARY

An object of the disclosure is to provide a secondary battery and a preparation method thereof, a positive electrode plate, a negative electrode plate and an electrically-powered device, so as to achieve the simultaneous enhancement of cycle life and energy density of lithium iron phosphate (LFP) batteries.

In order to achieve the above object, the following technical solutions are adopted herein.

In a first aspect, the present disclosure provides a secondary battery, comprising:

a positive electrode plate;
a negative electrode plate; and
a separator;
wherein the positive electrode plate comprises a positive electrode active material and a positive electrode current collector; the negative electrode plate comprises a negative electrode active material and a negative electrode current collector; and the positive electrode active material comprises a LFP positive electrode material, a first lithium supplementing additive and a second lithium supplementing additive; the first lithium supplementing additive comprises $Li_2NiO_2$ and the second lithium supplementing additive comprises $Li_5FeO_4$;

wherein the secondary battery has a first performance parameter $\alpha$ and a second performance parameter $\beta$ respectively satisfying the following formulas:

$$\alpha = \frac{M_4 * Y}{(M_1 * A_1 + M_2 * A_2 + M_3 * A_3) * X};$$

and

$$\beta = \frac{(A_2 + A_3) * 30 * 1000}{M_2 + M_3} + 2C;$$

wherein the first performance parameter $\alpha$ satisfies $1.0 \leq \alpha \leq 1.13$; and the second performance parameter $\beta$ satisfies $6 < \beta < 10$;

$A_1$ represents a weight percentage of the LFP positive electrode material in the positive electrode active material;

$A_2$ represents a weight percentage of the first lithium supplementing additive in the positive electrode material;

$A_3$ represents a weight percentage of the second lithium supplementing additive in the positive electrode material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of mg/cm$^2$;

Y represents a coating amount of the negative electrode active material on the negative electrode current collector, expressed in a unit of mg/cm$^2$; and

C represents an electrolyte filling coefficient, expressed in a unit of g/Ah.

The secondary battery satisfies at least one of the following conditions:
$A_1 + A_2 + A_3 = 1$, $80\% \leq A_1 \leq 99\%$, $0 < A_2 \leq 15\%$, and $0 < A_3 \leq 15\%$;

X is 17-32 mg/cm$^2$;

in response to a case that a discharge voltage range of the secondary battery is 2.0-4.4 V, $M_1$ is 150-170 mAh/g, $M_2$ is 400-500 mAh/g, and $M_3$ is 650-750 mAh/g;

$M_4$ is 350-400 mAh/g;

the negative electrode active material is graphite, and Y is 5-20 mg/cm$^2$; and

C satisfies $C \leq 3.6$ g/Ah.

In some embodiments, a material coated on the positive electrode current collector in the preparation of the positive electrode plate is a total positive electrode composite, and a weight percentage of the positive electrode active material in the total positive electrode composite is 92-99%.

In some embodiments, a material coated on the negative electrode current collector in the preparation of the negative electrode plate is a total negative electrode composite, and a weight percentage of the negative electrode active material in the total negative electrode composite is 85-99%.

In some embodiments, the negative electrode current collector is selected from the group consisting of copper foil, composite copper foil and a combination thereof; and a thickness of the negative electrode current collector is 1-20 $\mu$m.

In some embodiments, the separator comprises a substrate and a coating attached to the substrate; a thickness of the substrate is 5-20 $\mu$m; and a thickness of the coating is 1-6 $\mu$m.

In some embodiments, the substrate is made of polypropylene (PP), polyethylene (PE) or a combination thereof; and the coating is made of a ceramic material.

In some embodiments, the LFP positive electrode material is doped with an element selected from the group consisting of Ti, Al, Mg, V, Ni, Mn and a combination thereof; and a content of the element doped in the LFP positive electrode material is less than 5,000 ppm.

In some embodiments, the first lithium supplementing additive is doped with an element selected from the group consisting of Ti, Al, Co, Mn and a combination thereof.

In some embodiments, a content of the element doped in the first lithium supplementing additive is less than 5,000 ppm.

In some embodiments, the second lithium supplementing additive is doped with an element selected from the group consisting of Mn, Cu, Mo, Al, Ti, Mg, Zr, Zn and a combination thereof.

In some embodiments, a content of the element doped in the second lithium supplementing additive is less than 5,000 ppm.

In some embodiments, a surface of the second lithium supplementing additive is coated with a carbon layer; and a weight percentage of the carbon in the second lithium supplementing additive is 0.2-5.0%.

In a second aspect, the present disclosure provides a method of preparing the above secondary battery, comprising:

in the preparation of the secondary battery, defining a first performance parameter $\alpha$ and a second performance parameter $\beta$, and setting the first performance parameter $\alpha$ and the second performance parameter $\beta$ to meet corresponding requirements.

In a third aspect, the present disclosure provides a positive electrode plate, comprising:

a positive electrode active material; and
a positive electrode current collector;
wherein the positive electrode active material comprises the a lithium iron phosphate (LFP) positive electrode material, a first lithium supplementing additive and a second lithium supplementing additive; the first lithium supplementing additive is $Li_2NiO_2$, and the second lithium supplementing additive is $Li_5FeO_4$; the positive electrode plate is configured to prepare a secondary battery comprising the positive electrode plate, a negative electrode plate and a separator; and the negative electrode plate comprises a negative electrode active material and a negative electrode current collector;

the secondary battery has a first performance parameter $\alpha$ and a second performance parameter $\beta$ respectively satisfying the following formulas:

$$\alpha = \frac{M_4 * Y}{(M_1 * A_1 + M_2 * A_2 + M_3 * A_3) \; * X};$$

and

$$\beta = \frac{(A_2 + A_3) * 30 * 1000}{M_2 + M_3} + 2C;$$

wherein the first performance parameter $\alpha$ satisfies $1.0 \leq \alpha \leq 1.13$; and the second performance parameter $\beta$ satisfies $6 < \beta < 10$;

$A_1$ represents a weight percentage of the LFP positive electrode material in the positive electrode active material;
$A_2$ represents a weight percentage of the first lithium supplementing additive in the positive electrode material;
$A_3$ represents a weight percentage of the second lithium supplementing additive in the positive electrode material;
$M_1$ represents an initial charge specific capacity of the LFP positive electrode material, expressed in a unit of mAh/g;
$M_2$ represents an initial charging charge specific of the first lithium supplementing additive, expressed in a unit of mAh/g;
$M_3$ represents an initial charging charge specific of the second lithium supplementing additive, expressed in a unit of mAh/g;
$M_4$ represents an initial charging charge specific of the negative electrode active material, expressed in a unit of mAh/g;
X represents a coating amount of the positive electrode active material on the positive electrode current collector, expressed in a unit of $mg/cm^2$;
Y represents a coating amount of the negative electrode active material on the negative electrode current collector, expressed in a unit of $mg/cm^2$;
C represents an electrolyte filling coefficient, expressed in a unit of g/Ah;
the secondary battery satisfies at least one of the following conditions:
$A_1 + A_2 + A_3 = 1$, $80\% \leq A_1 \leq 99\%$, $0 < A_2 \leq 15\%$, and $0 < A_3 \leq 15\%$;
X is 17-32 $mg/cm^2$;
in response to a case that a discharge voltage range of the secondary battery is 2.0-4.4 V, $M_1$ is 150-170 mAh/g, $M_2$ is 400-500 mAh/g, and $M_3$ is 650-750 mAh/g;
$M_4$ is 350-400 mAh/g;

the negative electrode active material is graphite, and Y is 5-20 mg/cm$^2$; and

C satisfies C≤3.6 g/Ah.

In a fourth aspect, the present disclosure provides a negative electrode plate, comprising:

a negative electrode active material; and

a negative electrode current collector;

wherein the negative electrode plate is configured to prepare a secondary battery comprising a positive electrode plate, the negative electrode plate and a separator; the positive electrode plate comprises a positive electrode active material and a positive electrode current collector; the positive electrode active material comprises a lithium iron phosphate (LFP) positive electrode material, a first lithium supplementing additive and a second lithium supplementing additive, wherein the first lithium supplementing additive is $Li_2NiO_2$, and the second lithium supplementing additive is $Li_5FeO_4$.

the secondary battery has a first performance parameter α and a second performance parameter β respectively satisfying the following formulas:

$$\alpha = \frac{M_4 * Y}{(M_1 * A_1 + M_2 * A_2 + M_3 * A_3) \ * X};$$

and

$$\beta = \frac{(A_2 + A_3) * 30 * 1000}{M_2 + M_3} + 2C;$$

wherein the first performance parameter α satisfies 1.0≤α≤1.13; and the second performance parameter β satisfies 6<β<10;

$A_1$ represents a weight percentage of the LFP positive electrode material in the positive electrode active material;

$A_2$ represents a weight percentage of the first lithium supplementing additive in the positive electrode active material;

$A_3$ represents a weight percentage of the second lithium supplementing additive in the positive electrode active material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of mg/cm$^2$;

Y represents a coating amount of the negative electrode active material on the negative electrode current collector, expressed in a unit of mg/cm$^2$;

C represents an electrolyte filling coefficient, expressed in a unit of g/Ah;

the secondary battery satisfies at least one of the following conditions:

$A_1 + A_2 + A_3 = 1$, 80%≤$A_1$≤99%, 0<$A_2$≤15%, and 0<$A_3$≤15%;

X is 17-32 mg/cm$^2$;

in response to a case that a discharge voltage range of the secondary battery is 2.0-4.4 V, $M_1$ is 150-170 mAh/g, $M_2$ is 400-500 mAh/g, and $M_3$ is 650-750 mAh/g;

$M_4$ is 350-400 mAh/g;

the negative electrode active material is graphite, and Y is 5-20 mg/cm$^2$; and

C satisfies C≤3.6 g/Ah.

In a fifth aspect, the present disclosure provides an electrically-powered device, comprising:

the above secondary battery; or

a secondary battery prepared according to the above method.

The beneficial effects of the present disclosure are described below. A positive electrode active material includes a lithium iron phosphate (LFP) positive electrode material, $Li_2NiO_2$ and $Li_5FeO_4$. By adjusting a mixing ratio and limiting the mixing ratio, a specific capacity of active materials and an electrolyte filling coefficient to satisfy a specific relationship, the specific capacity and cycle performance of LFP batteries can be significantly improved, thereby making the lithium ion batteries simultaneously exhibit superior energy density, cycle performance and safety.

## DETAILED DESCRIPTION OF EMBODIMENTS

To make the objectives, technical solutions and advantages of the embodiments of the present disclosure clearer, the technical solutions in the embodiments of the present disclosure will be described clearly and completely below. Unless otherwise specified, the experiments in the following embodiments are performed under the conventional conditions or the conditions recommended by the manufacturer, and reagents or instruments are all commercially available.

The present disclosure provides a secondary battery, including a positive electrode plate, a negative electrode plate and a separator. According to parameters of the positive electrode plate, the negative electrode plate and the separator, a first performance parameter $\alpha$ and a second performance parameter $\beta$ are defined. By adjusting formulas of the first performance parameter $\alpha$ and the second performance parameter $\beta$, the first performance parameter $\alpha$ and the second performance parameter $\beta$ are configured to meet a specific value range, thereby making the lithium ion batteries simultaneously exhibit superior energy density and cycle performance.

In an embodiment, the positive electrode plate includes a positive electrode active material and a positive electrode current collector. The positive electrode active material is a main component of a positive electrode active coating formed on the positive electrode current collector. The negative electrode plate includes a negative electrode active material and a negative electrode current collector. The negative electrode active material is a main component of a negative electrode active coating formed on the negative electrode current collector.

In this case, the embodiments of the present disclosure provide a method of adjusting the first performance parameter $\alpha$ and the second performance parameter $\beta$ regarding of lithium iron phosphate (LFP) batteries.

In an embodiment, the positive electrode active material includes a LFP positive electrode material, a first lithium supplementing additive and a second lithium supplementing additive. The first lithium supplementing additive is $Li_2NiO_2$, and the second lithium supplementing additive is $Li_5FeO_4$. By adding a double lithium supplementing material of $Li_2NiO_2$ and $Li_5FeO_4$, disadvantages of a single lithium supplementing material are compensated, thereby making the lithium-ion batteries simultaneously exhibit superior energy density and cycle performance.

In an embodiment, the first performance parameter $\alpha$ and the second performance parameter $\beta$ respectively satisfy the following formulas:

$$\alpha = \frac{M_4 * Y}{(M_1 * A_1 + M_2 * A_2 + M_3 * A_3) \ * X};$$

and

$$\beta = \frac{(A_2 + A_3) * 30 * 1000}{M_2 + M_3} + 2C;$$

where the first performance parameter $\alpha$ satisfies $1.0 \leq \alpha \leq 1.13$, and the second performance parameter $\beta$ satisfies $6 < \beta < 10$. By adjusting $\alpha$ and $\beta$, the applicant noted that the lithium-ion batteries simultaneously exhibited superior energy density and cycle performance within this range.

In an embodiment, the first performance parameter $\alpha$ can be 1.00, 1.02, 1.05, 1.08, 1.10 or 1.13; and the second performance parameter $\beta$ can be 6.0, 7.0, 8.0, 9.0, or 10.0.

Individual parameters involved in expressions of the first performance parameter $\alpha$ and the second performance parameter $\beta$ are defined as follows:

$A_1$ represents a weight percentage of the LFP positive electrode material in the positive electrode active material, which is substituted into the formula in the form of percentage, such as 90% (i.e., 0.9);
$A_2$ represents a weight percentage of the first lithium supplementing additive in the positive electrode active material, which is substituted into the formula in the form of percentage, such as 5% (i.e.,0.05); and
$A_3$ represents a weight percentage of the second lithium supplementing additive in the positive electrode active material, which is substituted into the formula in the form of percentage, such as 5% (i.e.,0.05).

In some embodiments, $A_1 + A_2 + A_3 = 1$, and on the premise of $A_1 + A_2 + A_3 = 1$, $80\% \leq A_1 \leq 99\%$, $0 < A_2 \leq 15\%$ and $0 < A_3 \leq 15\%$; preferably, $88\% \leq A_1 \leq 99\%$, $0 < A_2 \leq 10\%$ and $0 < A_3 \leq 10\%$.

In some embodiments, $A_1$ can be 80%, 82%, 84%, 86%, 88%, 90%, 92%, 95%, 97% or 99%; $A_2$ can be 0.1%, 0.5%, 0.7%, 1.0%, 2.0%, 3.0%, 4.0%, 5.0%, 6.0%, 7.0%, 8.0%, 9.0%, 10.0%, 11.0%, 12.0%, 13.0%, 14.0% or 15.0%; $A_3$ can be 0.1%, 0.5%, 0.7%, 1.0%, 2.0%, 3.0%, 4.0%, 5.0%, 6.0%, 7.0%, 8.0%, 9.0%, 10.0%, 11.0%, 12.0%, 13.0%, 14.0% or 15.0%.

$M_1$ represents an initial charge specific capacity of the LFP positive electrode material, expressed in a unit of mAh/g; on the premise of a discharging voltage range of 2.0-4.4 V of the secondary battery, $M_1$ is relatively fixed, generally ranging from 150 mAh/g to 170 mAh/g, and preferably, $M_1$ is ranging from 158 mAh/g to 165 mAh/g, such as 150 mAh/g, 160 mAh/g and 170 mAh/g;

$M_2$ represents an initial charge specific capacity of the first lithium supplementing additive, expressed in a unit of mAh/g; on the premise of a discharging voltage range of 2.0-4.4 V of the secondary battery, $M_2$ is relatively fixed due to a fixed material, generally ranging from 400 mAh/g to 500 mAh/g, and preferably ranging from 400 mAh/g to 440 mAh/g, such as 400 mAh/g, 420 mAh/g, 430 mAh/g, 440 mAh/g, 450 mAh/g, 480 mAh/g and 500 mAh/g;

$M_3$ represents an initial charge specific capacity of the second lithium supplementing additive, expressed in a unit of mAh/g; on the premise of a discharging voltage range of 2.0-4.4 V of the secondary battery, $M_3$ is relatively fixed due to a fixed material, generally ranging from 650 mAh/g to 750 mAh/g, and preferably ranging from 690 mAh/g to 710 mAh/g, such as 650 mAh/g, 680 mAh/g, 700 mAh/g and 750 mAh/g;

$M_4$ represents an initial charge specific capacity of the negative electrode active material, expressed in a unit of mAh/g; $M_4$ of a different material varies slightly, and the initial charge specific capacity $M_4$ is ranging from 350 mAh/g to 400 mAh/g, preferably ranging from 370 mAh/g to 380 mAh/g; if the negative electrode active material is made of a graphite material, specifically artificial graphite, natural graphite, or a combination thereof, the initial charge specific capacity $M_4$ of the graphite material is 375 mAh/g; and

C represents an electrolyte filling coefficient, which is an exactly fixed constant, referring to a ratio of a filling volume of electrolyte and a preset discharging capacity in batteries; a calculation formula of C satisfies:

$$\text{electrolyte filling coefficient} = \frac{\text{filling volume}}{\text{discharging capacity}} \ \text{g/Ah}.$$

In some embodiments, C satisfies C≤3.6 g/Ah, preferably within a range of 2.9-3.5 g/Ah, such as 2.9 g/Ah, 3.0 g/Ah, 3.1 g/Ah, 3.2 g/Ah, 3.3 g/Ah, 3.4 g/Ah and 3.5 g/Ah.

X represents a coating amount of the positive electrode active material on the positive electrode current collector, expressed in a unit of mg/cm$^2$, referring to that X represents a content of the positive electrode active material (including the LFP positive electrode material, the first lithium supplementing additive and the second lithium supplementing additive) contained in each square centimeter of the positive electrode current collector. X can be 17 mg/cm$^2$, 20 mg/cm$^2$, 25 mg/cm$^2$, 30 mg/cm$^2$ or 32 mg/cm$^2$, within a range of 17-32 mg/cm$^2$.

In some embodiments, a material coated on the positive electrode current collector in the preparation of the positive electrode plate is a total positive electrode composite, and a weight percentage of the positive electrode active material in the total positive electrode composite is 92-99%, and other components are a conductive agent (such as conductive carbon black), a binder (such as polyvinylidene fluoride) and a dispersant (such as N-methylpyrrolidone), respectively. In other words, an area density of a single-side coating of the positive electrode active material X equals $\alpha$ multiplied by X $_{total\ positive\ electrode\ composite}$, where $a$ is 92-99%.

In some embodiments, LiFePO$_4$ is a main component of the LFP positive electrode material. The LFP positive electrode material is doped with an element selected from the group consisting of Ti, Al, Mg, V, Ni, Mn and a combination thereof, and a content of the element doped in the LFP positive electrode material is less than 5,000 ppm.

In some embodiments, the first lithium supplementing additive is doped with an element selected from the group consisting of Ti, Al, Co, Mn and a combination thereof, and a content of the element doped in the first lithium supplementing additive has no limitation, and is less than 5,000 ppm.

In some embodiments, the second lithium supplementing additive is doped with an element selected from the group consisting of Mn, Cu, Mo, Al, Ti, Mg, Zr, Zn and a combination thereof. A surface of the second lithium supplementing additive is coated with a carbon layer, and a weight percentage of carbon in the second lithium supplementing additive is 0.2-5.0%. Preferably, the surface of the second lithium supplementing additive can be 0.2%, 0.5%, 1.0%, 2.0%, 3.0%, 4.0% or 5.0%.

Y represents a coating amount of the negative electrode active material on the negative electrode current collector, expressed in a unit of mg/cm$^2$, referring to that Y represents a content of the negative electrode active material (such as graphite) contained in each square centimeter of the negative electrode current collector. Y can be 5, 8, 10, 12, 15, 18 or 20 mg/cm$^2$, within a range of 5-20 mg/cm$^2$; and preferably, within a range of 8-15 mg/cm$^2$.

In some embodiments, a material coated on the negative electrode current collector is a total negative electrode composite, and a weight percentage of the negative electrode active material in the total negative electrode composite is 85-99%, preferably, 92-99%, and other components include a conductive agent (such as conductive carbon black), a binder (such as polyvinylidene fluoride) and a dispersant (such as N-methylpyrrolidone). In other words, an area density of a single-sided coating of the negative electrode active material Y equals *b* multiplied by Y *total negative electrode composite,* where *b* is 92-99%.

In some embodiments, the negative electrode current collector is selected from the group consisting of copper foil, composite copper foil and a combination thereof; and a thickness of the negative electrode current collector is 1-20 μm, preferably, 4-10 μm, such as 1 μm, 2 μm, 4 μm, 6 μm, 8 μm, 10 μm, 15 μm and 20 μm.

In some embodiments, the separator includes a substrate and a coating attached to the substrate. A thickness of the substrate is 5-20 μm (such as 5 μm, 10 μm, 15 μm and 20 μm), and a thickness of the coating is 1-6 μm (such as 1 μm, 2 μm, 4 μm and 6 μm). The substrate is made of polypropylene (PP), polyethylene (PE) or a combination thereof; and the coating is made of a ceramic material. There is no limitation on specific materials, mainly aluminium oxide, a binder or a combination thereof.

It should be noted that the first performance parameter α represents an excess ratio of the charge capacity of the negative electrode plate relative to that of the positive electrode plate. If value α is too low, there is a risk of lithium plating on the negative electrode plate during a charging process; if value α is too high, the coating amount on the negative electrode plate will be excessive. As a result, more active lithium will be consumed when the negative electrode plate forms the solid electrolyte interface (SEI), which is not conducive to a capacity performance of the positive electrode material and reduce the energy density of the battery.

It should be noted that there is no limitation on the number of cells in the secondary battery provided by the embodiments of this disclosure, and the cell can be in the form of a battery pack.

The present disclosure provides a method of preparing the secondary battery in the above embodiments, including in the preparation of the secondary battery, defining the first performance parameter α and the second performance parameter β, and setting the first performance parameter α and the second performance parameter β to meet corresponding requirements.

In some embodiments, during the preparing process, some parameters such as values of $A_1$, $A_2$, $A_3$, $M_2$, and $M_3$, an area density of the active material coating during the preparation of the positive electrode plate and the negative electrode plate, and an electrolyte filling coefficient are adjusted, respectively. By adjusting the above parameters and constructing the formulas of the first performance parameter α and the second performance parameter β, α and β can meet specific ranges. The applicant found that by adopting this method, the relationship between energy density and cycle life can be better balanced, effectively enhancing the energy density of the cells and maintaining cycles at a superior level.

In some embodiments, the present disclosure provides the positive electrode plate, including the positive electrode active material and the positive electrode current collector. The positive electrode active material includes the LFP positive electrode material, the first lithium supplementing additive and the second lithium supplementing additive. The first lithium supplementing additive is $Li_2NiO_2$, and the second lithium supplementing additive is $Li_5FeO_4$. The positive electrode plate is configured to prepare the secondary battery, including the positive electrode plate, the negative electrode plate and the separator. The negative electrode plate includes the negative electrode active material and the negative electrode current collector.

The secondary battery has the first performance parameter α and the second performance parameter β respectively satisfying the following formulas:

$$\alpha = \frac{M_4 * Y}{(M_1 * A_1 + M_2 * A_2 + M_3 * A_3) \ * X};$$

and

$$\beta = \frac{(A_2 + A_3) * 30 * 1000}{M_2 + M_3} + 2C;$$

where the first performance parameter α satisfies 1.0≤α≤1.13; and the second performance parameter β satisfies 6<β<10;

$A_1$ represents a weight percentage of the LFP positive electrode material in the positive electrode active material;

$A_2$ represents a weight percentage of the first lithium supplementing additive in the positive electrode material;

$A_3$ represents a weight percentage of the second lithium supplementing additive in the positive electrode material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of $mg/cm^2$;

Y represents a coating amount of the negative electrode active material on the negative electrode current collector, expressed in a unit of $mg/cm^2$; and

C represents an electrolyte filling coefficient, expressed in a unit of g/Ah.

The value range of individual parameters can be referred to the aforementioned content of the description and will not be repeated herein.

The present disclosure provides the negative electrode plate, including the negative electrode active material and the negative electrode current collector. The negative electrode plate is configured to prepare the secondary battery, including the positive electrode plate, the negative electrode plate and the separator. The positive electrode plate includes the positive electrode active material and the positive electrode current collector. The positive electrode active material includes the LFP positive electrode material, the first lithium supplementing additive and the second lithium supplementing additive. The first lithium supplementing additive is $Li_2NiO_2$ and the second lithium supplementing additive is $Li_5FeO_4$.

The secondary battery has the first performance parameter $\alpha$ and the second performance parameter $\beta$ respectively satisfying the following formulas:

$$\alpha = \frac{M_4*Y}{(M_1*A_1+M_2*A_2+M_3*A_3)\ *X};$$

and

$$\beta = \frac{(A_2+A_3)*30*1000}{M_2+M_3} + 2C;$$

where the first performance parameter $\alpha$ satisfies $1.0 \leq \alpha \leq 1.13$; and the second performance parameter $\beta$ satisfies $6 < \beta < 10$;

$A_1$ represents a weight percentage of the LFP positive electrode material in the positive electrode active material;

$A_2$ represents a weight percentage of the first lithium supplementing additive in the positive electrode active material;

$A_3$ represents a weight percentage of the second lithium supplementing additive in the positive electrode active material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of $mg/cm^2$;

Y represents a coating amount of the negative electrode active material on the negative electrode current collector, expressed in a unit of $mg/cm^2$; and

C represents an electrolyte filling coefficient, expressed in a unit of g/Ah.

The value range of individual parameters can be referred to the aforementioned content of the description and will not be repeated herein.

The embodiment of this disclosure provides an electrically-powered device, including the secondary battery and an electrical appliance. The secondary battery is used to supply power to the electrical appliance.

The features and performances of the present disclosure will be further detailly described in combination with the embodiments.

**EMBODIMENT 1**

The embodiment provided a method of preparing a secondary battery. During the preparation process, the formulas of the first performance parameter $\alpha$ and the second performance parameter $\beta$ were constructed, such that $\alpha$ and

β could meet the corresponding requirements.

## (1) Preparation of a positive electrode plate

The positive electrode active component was $LiFePO_4$. The lithium supplementing additive was $Li_2NiO_2$, where the doped element was Al, and the content of the doped element was 500 ppm. The lithium supplementing additive was $Li_5FeO_4$, where the doped elements were Al and Ti, and the total content of the doped elements was 8,000 ppm. $M_1$ was 160 mAh/g. $M_2$ was 420 mAh/g. $M_3$ was 700 mAh/g.

The positive electrode active material includes $LiFePO_4$, $Li_2NiO_2$ and $Li_5FeO_4$, with weight percentages controlled to at 95.5%, 0.5% and 4%, respectively.

The positive electrode active material, a conductive agent (conductive carbon black) and a binder (polyvinylidene fluoride) were mixed in a weight ratio of 97: 1: 2 to obtain a mixture. The mixture was added with a dispersant (polyvinylpyrrolidone) to form a positive electrode slurry with a solid content of 57-61%. The positive electrode slurry was evenly coated on front and back sides of a positive electrode current collector and dried to form a coating, where a coating amount of the positive electrode active material on the positive electrode current collector was controlled to at 24.6 $mg/cm^2$. The current collector was compacted by rolling to obtain the positive electrode plate with a compaction density P.D of 2.55 $g/cm^3$. The positive electrode current collector was an aluminum foil with a thickness of 13 $\mu m$.

## (2) Preparation of a negative electrode plate

A negative electrode active material (artificial graphite), a conductive agent (conductive carbon black), a binder (styrene-butadiene rubber, SBR) and a dispersant (sodium carboxymethyl cellulose, CMC) were mixed in a weight ratio of 95: 1: 2: 2, and dispersed with deionized water to form a negative electrode slurry with a solid content of 48-53%. The negative electrode slurry was coated on front and back sides of a negative electrode current collector, and dried under heating to form a coated current collector, where a coating amount Y of the negative electrode active material on the negative electrode current collector was controlled to at 13.2 $mg/cm^2$. The coated current collector was compacted by rolling to obtain a negative electrode plate, where an initial charge specific capacity $M_4$ of the negative electrode active material was 375 mAh/g, and the negative electrode current collector was a copper foil with a thickness of 6 $\mu m$.

## (3) Preparation of a separator

Front and back sides of a PE base film were respectively coated with a nano-alumina coating, and dried in a vacuum oven for solvent removal to obtain the separator, where a thickness of the PE base film was 7 $\mu m$, and a thickness of the coating was 3 $\mu m$.

## (4) Assembly

The positive electrode plate, the negative electrode plate and the separator obtained above were stacked in a Z shape with a sequence of "separator-negative electrode plate-separator-positive electrode plate", ensuring that the positive electrode plate was completely at a middle of the negative electrode plate. The stacked structure was sequentially subjected to hot pressing, tab welding, packaging and baking, where a total water content in the positive electrode plate, the negative electrode plate and the separator after baking was controlled to at 250 ppm. Then the stacked structure was filled with an electrolyte to obtain the secondary battery, where an electrolyte filling coefficient C was controlled to at 3.5 g/Ah.

The embodiment also provided a secondary battery prepared according to the above method.

## EMBODIMENTS 2-5

The only difference between embodiments 2-5 and embodiment 1 lay in the different values of the parameters. Parameters with different values were all listed in Table 1.

## COMPARATIVE EXAMPLES 1-2

The only difference between comparative examples 1-2 and embodiment 1 lay in the different values of the parameters. Parameters with different values were all listed in Table 1.

Table 1 Parameter control of embodiments and comparative examples in the preparation process and performances of the obtained secondary batteries

| Number | $\alpha$ | $\beta$ | X | Y | $A_2$ | $A_3$ | $M_2$. | $M_3$ | C | volume energy density | 1C/1C 45°C 3.5-3.65V 500-cycle capacity retention rate | Note |
|---|---|---|---|---|---|---|---|---|---|---|---|---|
| Comparative Example 1 | 1.13 | 10.0 | 24.5 | 14.6 | 5% | 5% | 400 | 660 | 3.6 | 340 | 98.3% | $\alpha$=1.13, $\beta$=10, cell E.D. low |
| Comparative Example 2 | 1.00 | 6.0 | 23 | 10 | 0% | 0.50% | 500 | 750 | 2.96 | 456 | 90.0% | $\alpha$=1, $\beta$=6, cell E.D. very high, short service life |
| Embodiment 1 | 1.10 | 8.21 | 24.6 | 13.2 | 0.50% | 4% | 420 | 700 | 3.5 | 400 | 97.5% | $1{\leq}\alpha{\leq}1.13$, $6{<}\beta{<}10$, cell E.D. high, good service life |
| Embodiment 2 | 1.09 | 7.86 | 24.9 | 12.9 | 0.80% | 3.20% | 450 | 680 | 3.4 | 407 | 96.2% | $1{\leq}\alpha{\leq}1.13$, $6{<}\beta{<}10$, cell E.D. high, good service life |
| Embodiment 3 | 1.06 | 8.12 | 24.9 | 12.6 | 0.50% | 3.50% | 430 | 680 | 3.52 | 420 | 95.0% | $1{\leq}\alpha{\leq}1.13$, $6{<}\beta{<}10$, cell E.D. high, good service life |
| Embodiment 4 | 1.08 | 7.68 | 25.2 | 12.4 | 1% | 1.50% | 420 | 680 | 3.5 | 410 | 94.3% | $1{\leq}\alpha{\leq}1.13$, $6{<}\beta{<}10$, cell E.D. high, good service life |
| Embodiment 5 | 1.05 | 7.29 | 26 | 12.2 | 0.50% | 1% | 450 | 700 | 3.45 | 430 | 92.5% | $1{\leq}\alpha{\leq}1.13$, $6{<}\beta{<}10$, cell E.D. high, good service life |

As could be seen from Table 1, the embodiments of the present disclosure achieved the simultaneous enhancement of the energy density and the cycle performance by controlling the performance parameters to at $1.0{\leq}\alpha{\leq}1.13$ and $6{<}\beta{<}10$. Exceeding the above range will result in an unsatisfactory energy density or a poor service life.

Provided herein are merely some preferred embodiments of the disclosure, and are not intended to limit the present disclosure. For those skilled in the art, the present disclosure could have various modifications and variations. Any modifications, replacements and improvements made by those skilled in the art without departing from the spirit and principle of the disclosure shall fall within the scope of the disclosure defined by the appended claims.

## INDUSTRIAL APPLICABILITY

The present disclosure provides a positive electrode active material, including a lithium iron phosphate (LFP)

positive electrode material, $Li_2NiO_2$ and $Li_5FeO_4$. By adjusting a mixing ratio and limiting the mixing ratio, a specific capacity of active materials and an electrolyte filling coefficient to satisfy a specific relationship, the specific capacity and cycle performance of LFP batteries can be significantly improved, thereby providing a theoretical reference during the LFP battery manufacturing process. The present disclosure is easily implementable, and have a superior industrial applicability.

**Claims**

1. A secondary battery, comprising:

a positive electrode plate;
a negative electrode plate; and
a separator;
**characterized in that** the positive electrode plate comprises a positive electrode active material and a positive electrode current collector; the negative electrode plate comprises a negative electrode active material and a negative electrode current collector; the positive electrode active material comprises a lithium iron phosphate (LFP) positive electrode material, a first lithium supplementing additive and a second lithium supplementing additive; the first lithium supplementing additive comprises $Li_2NiO_2$; and the second lithium supplementing additive comprises $Li_5FeO_4$;
the secondary battery has a first performance parameter $\alpha$ and a second performance parameter $\beta$ respectively satisfying the following formulas:

$$\alpha = \frac{M_4 * Y}{(M_1 * A_1 + M_2 * A_2 + M_3 * A_3) \, * X};$$

and

$$\beta = \frac{(A_2 + A_3) * 30 * 1000}{M_2 + M_3} + 2C;$$

wherein the first performance parameter $\alpha$ satisfies $1.0 \leq \alpha \leq 1.13$; and the second performance parameter $\beta$ satisfies $6 < \beta < 10$;
$A_1$ represents a weight percentage of the LFP positive electrode material in the positive electrode active material;
$A_2$ represents a weight percentage of the first lithium supplementing additive in the positive electrode active material;
$A_3$ represents a weight percentage of the second lithium supplementing additive in the positive electrode active material;
$M_1$ represents an initial charge specific capacity of the LFP positive electrode material, expressed in a unit of mAh/g;
$M_2$ represents an initial charge specific capacity of the first lithium supplementing additive, expressed in a unit of mAh/g;
$M_3$ represents an initial charge specific capacity of the second lithium supplementing additive, expressed in a unit of mAh/g;
$M_4$ represents an initial charge specific capacity of the negative electrode active material, expressed in a unit of mAh/g;
X represents a coating amount of the positive electrode active material on the positive electrode current collector, expressed in a unit of mg/cm$^2$;
Y represents a coating amount of the negative electrode active material on the negative electrode current collector, expressed in a unit of mg/cm$^2$;
C represents an electrolyte filling coefficient, expressed in a unit of g/Ah;
the secondary battery satisfies at least one of the following conditions:
$A_1 + A_2 + A_3 = 1$, $80\% \leq A_1 \leq 99\%$, $0 < A_2 \leq 15\%$, and $0 < A_3 \leq 15\%$;
X is 17-32 mg/cm$^2$;
in response to a case that a discharge voltage range of the secondary battery is 2.0-4.4 V, $M_1$ is 150-170 mAh/g, $M_2$ is 400-500 mAh/g, and $M_3$ is 650-750 mAh/g;
$M_4$ is 350-400 mAh/g;
the negative electrode active material is graphite, and Y is 5-20 mg/cm$^2$; and

C satisfies C≤3.6 g/Ah.

2. The secondary battery according to claim 1, **characterized in that** a material coated on the positive electrode current collector in the preparation of the positive electrode plate is a total positive electrode composite, and a weight percentage of the positive electrode active material in the total positive electrode composite is 92-99%.

3. The secondary battery according to claim 1 or 2, **characterized in that** a material coated on the negative electrode current collector in the preparation of the negative electrode plate is a total negative electrode composite, and a weight percentage of the negative electrode active material in the total negative electrode composite is 85-99%.

4. The secondary battery according to claim 3, **characterized in that** the negative electrode current collector is selected from the group consisting of copper foil, composite copper foil and a combination thereof; and a thickness of the negative electrode current collector is 1-20 $\mu$m.

5. The secondary battery according to any one of claims 1-4, **characterized in that** the separator comprises a substrate and a coating attached to the substrate; a thickness of the substrate is 5-20 $\mu$m; and a thickness of the coating is 1-6 $\mu$m.

6. The secondary battery according to claim 5, **characterized in that** the substrate is made of polypropylene (PP), polyethylene (PE) or a combination thereof; and the coating is made of a ceramic material.

7. The secondary battery according to any one of claims 1-6, **characterized in that** the LFP positive electrode material is doped with an element selected from the group consisting of Ti, Al, Mg, V, Ni, Mn and a combination thereof; and a content of the element doped in the LFP positive electrode material is less than 5,000 ppm.

8. The secondary battery according to any one of claims 1-7, **characterized in that** the first lithium supplementing additive is doped with an element selected from the group consisting of Ti, Al, Co, Mn and a combination thereof.

9. The secondary battery according to claim 8, **characterized in that** a content of the element doped in the first lithium supplementing additive is less than 5,000 ppm.

10. The secondary battery according to any one of claims 1-9, **characterized in that** the second lithium supplementing additive is doped with an element selected from the group consisting of Mn, Cu, Mo, Al, Ti, Mg, Zr, Zn and a combination thereof.

11. The secondary battery according to claim 10, **characterized in that** a content of the element doped in the second lithium supplementing additive is less than 5,000 ppm.

12. The secondary battery according to claim 10 or 11, **characterized in that** a surface of the second lithium supplementing additive is coated with a carbon layer; and a weight percentage of carbon in the second lithium supplementing additive is 0.2-5.0%.

13. A method of preparing the secondary battery according to any one of claims 1-12, comprising:
in the preparation of the secondary battery, defining the first performance parameter $\alpha$ and the second performance parameter $\beta$, and setting the first performance parameter $\alpha$ and the second performance parameter $\beta$ to meet corresponding requirements.

14. A positive electrode plate, comprising:

a positive electrode active material; and
a positive electrode current collector;
**characterized in that** the positive electrode active material comprises a lithium iron phosphate (LFP) positive electrode material, a first lithium supplementing additive and a second lithium supplementing additive; the first lithium supplementing additive is $Li_2NiO_2$, and the second lithium supplementing additive is $Li_5FeO_4$; the positive electrode plate is configured to prepare a secondary battery comprising the positive electrode plate, a negative electrode plate and a separator; and the negative electrode plate comprises a negative electrode active material and a negative electrode current collector;
the secondary battery has a first performance parameter $\alpha$ and a second performance parameter $\beta$ respectively

satisfying the following formulas:

$$\alpha = \frac{M_4 * Y}{(M_1 * A_1 + M_2 * A_2 + M_3 * A_3) * X};$$

and

$$\beta = \frac{(A_2 + A_3) * 30 * 1000}{M_2 + M_3} + 2C;$$

wherein the first performance parameter $\alpha$ satisfies $1.0 \leq \alpha \leq 1.13$; and the second performance parameter $\beta$ satisfies $6 < \beta < 10$;

$A_1$ represents a weight percentage of the LFP positive electrode material in the positive electrode active material;

$A_2$ represents a weight percentage of the first lithium supplementing additive in the positive electrode active material;

$A_3$ represents a weight percentage of the second lithium supplementing additive in the positive electrode active material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of mg/cm$^2$;

Y represents a coating amount of the negative electrode active material on the negative electrode current collector, expressed in a unit of mg/cm$^2$;

C represents an electrolyte filling coefficient, expressed in a unit of g/Ah;

the secondary battery satisfies at least one of the following conditions:

$A_1 + A_2 + A_3 = 1$, $80\% \leq A_1 \leq 99\%$, $0 < A_2 \leq 15\%$, and $0 < A_3 \leq 15\%$;

X is 17-32 mg/cm$^2$;

in response to a case that a discharge voltage range of the secondary battery is 2.0-4.4 V, $M_1$ is 150-170 mAh/g, $M_2$ is 400-500 mAh/g, and $M_3$ is 650-750 mAh/g;

$M_4$ is 350-400 mAh/g;

the negative electrode active material is graphite, and Y is 5-20 mg/cm$^2$; and

C satisfies $C \leq 3.6$ g/Ah.

15. A negative electrode plate, comprising:

a negative electrode active material; and

a negative electrode current collector;

**characterized in that** the negative electrode plate is configured to prepare a secondary battery comprising a positive electrode plate, the negative electrode plate and a separator; the positive electrode plate comprises a positive electrode active material and a positive electrode current collector; the positive electrode active material comprises a lithium iron phosphate (LFP) positive electrode material, a first lithium supplementing additive and a second lithium supplementing additive, wherein the first lithium supplementing additive is $Li_2NiO_2$, and the second lithium supplementing additive is $Li_5FeO_4$;

the secondary battery has a first performance parameter $\alpha$ and a second performance parameter $\beta$ respectively satisfying the following formulas:

$$\alpha = \frac{M_4 * Y}{(M_1 * A_1 + M_2 * A_2 + M_3 * A_3) * X};$$

and

$$\beta = \frac{(A_2+A_3)*30*1000}{M_2+M_3} + 2C;$$

wherein the first performance parameter $\alpha$ satisfies $1.0 \leq \alpha \leq 1.13$; and the second performance parameter $\beta$ satisfies $6 < \beta < 10$;

$A_1$ represents a weight percentage of the LFP positive electrode material in the positive electrode active material;

$A_2$ represents a weight percentage of the first lithium supplementing additive in the positive electrode active material;

$A_3$ represents a weight percentage of the second lithium supplementing additive in the positive electrode active material;

$M_1$ represents an initial charge specific capacity of the LFP positive electrode material, expressed in a unit of mAh/g;

$M_2$ represents an initial charge specific capacity of the first lithium supplementing additive, expressed in a unit of mAh/g;

$M_3$ represents an initial charge specific capacity of the second lithium supplementing additive, expressed in a unit of mAh/g;

$M_4$ represents an initial charge specific capacity of the negative electrode active material, expressed in a unit of mAh/g;

X represents a coating amount of the positive electrode active material on the positive electrode current collector, expressed in a unit of $mg/cm^2$;

Y represents a coating amount of the negative electrode active material on the negative electrode current collector, expressed in a unit of $mg/cm^2$;

C represents an electrolyte filling coefficient, expressed in a unit of g/Ah;

the secondary battery satisfies at least one of the following conditions:

$A_1+A_2+A_3=1$, $80\% \leq A_1 \leq 99\%$, $0 < A_2 \leq 15\%$, and $0 < A_3 \leq 15\%$;

X is 17-32 $mg/cm^2$;

in response to a case that a discharge voltage range of the secondary battery is 2.0-4.4 V, $M_1$ is 150-170 mAh/g, $M_2$ is 400-500 mAh/g, and $M_3$ is 650-750 mAh/g;

$M_4$ is 350-400 mAh/g;

the negative electrode active material is graphite, and Y is 5-20 $mg/cm^2$; and

C satisfies $C \leq 3.6$ g/Ah.

16. An electrically-powered device, comprising:

the secondary battery according to any one of claims 1-12; or
a secondary battery prepared according to the method of claim 13.

## INTERNATIONAL SEARCH REPORT

| International application No. |
|---|
| **PCT/CN2024/111950** |

**A. CLASSIFICATION OF SUBJECT MATTER**

H01M4/13(2010.01)i; H01M10/058(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, WPABS, USTXT, VEN, DWPI, CNKI: 电池, 补锂, 添加剂, 活性材料, 磷酸铁锂, 正极, 克容量, 涂覆, 掺杂, 铁, 镍, 碳, 石墨, battery, lithium, iron, phosphate, anode, active, material, doping, nickel, iron, coat, supplement, additive, adjust, gram capacity, mixing, ratio, carbon, graphite

**C. DOCUMENTS CONSIDERED TO BE RELEVANT**

| Category* | Citation of document, with indication, where appropriate, of the relevant passages | Relevant to claim No. |
|---|---|---|
| PX | CN 118099545 A (SHANGHAI LANJUN NEW ENERGY TECHNOLOGY CO., LTD.) 28 May 2024 (2024-05-28)<br>claims 1-16 | 1-16 |
| A | CN 117117337 A (FAR EAST BATTERY CO., LTD.) 24 November 2023 (2023-11-24)<br>description, paragraphs 0005-0041 | 1-16 |
| A | CN 114497514 A (AESC TECHNOLOGY (JIANGSU) CO., LTD. et al.) 13 May 2022 (2022-05-13)<br>description, paragraphs 0005-0065 | 1-16 |
| A | CN 113078305 A (JIANGXI ANCHI NEW ENERGY TECHNOLOGY CO., LTD.) 06 July 2021 (2021-07-06)<br>entire document | 1-16 |
| A | CN 117613190 A (SUNWODA EVB CO., LTD.) 27 February 2024 (2024-02-27)<br>entire document | 1-16 |
| A | CN 113991101 A (JIANGSU HIGEE ENERGY CO., LTD.) 28 January 2022 (2022-01-28)<br>entire document | 1-16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 November 2024** | **09 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/111950** |

**C.     DOCUMENTS CONSIDERED TO BE RELEVANT**

| Category* | Citation of document, with indication, where appropriate, of the relevant passages | Relevant to claim No. |
| --- | --- | --- |
| A | EP 4170755 A1 (CONTEMPORARY AMPEREX TECHNOLOGY CO., LTD.) 26 April 2023 (2023-04-26)<br>      entire document | 1-16 |

Form PCT/ISA/210 (second sheet) (July 2022)

**INTERNATIONAL SEARCH REPORT**
Information on patent family members

International application No.

**PCT/CN2024/111950**

| Patent document cited in search report | | | Publication date (day/month/year) | Patent family member(s) | | | Publication date (day/month/year) |
|---|---|---|---|---|---|---|---|
| CN | 118099545 | A | 28 May 2024 | None | | | |
| CN | 117117337 | A | 24 November 2023 | None | | | |
| CN | 114497514 | A | 13 May 2022 | None | | | |
| CN | 113078305 | A | 06 July 2021 | None | | | |
| CN | 117613190 | A | 27 February 2024 | None | | | |
| CN | 113991101 | A | 28 January 2022 | None | | | |
| EP | 4170755 | A1 | 26 April 2023 | WO | 2022047705 | A1 | 10 March 2022 |
| | | | | US | 2023108289 | A1 | 06 April 2023 |
| | | | | EP | 4170755 | A4 | 16 August 2023 |
| | | | | CN | 116097468 | A | 16 August 2023 |

Form PCT/ISA/210 (patent family annex) (July 2022)